# EUROPÄISCHE PATENTSCHRIFT

(11) **EP 2 728 203 B1**
(45) Veröffentlichungstag und Bekanntmachung des Hinweises auf die Patenterteilung: **09.11.2016**
(21) Anmeldenummer: 13004645.1
(22) Anmeldetag: 25.09.2013
(51) Int. Cl.: F15B 7/00, B62D 5/065

(54) **Hydrostatische Stellschaltung sowie deren Verwendung**
Hydrostatic control circuit and its use
Circuit de contrôle hydrostatique et son utilisation

(30) Priorität: 30.10.2012 DE 102012021207
(43) Veröffentlichungstag der Anmeldung: 07.05.2014
(73) Patentinhaber: Weber-Hydraulik GmbH, 74363 Güglingen (DE)
(72) Erfinder: Käsler, Richard, 53424 Remagen (DE); Zatrieb, Jacek, 74363 Güglingen (DE)
(74) Vertreter: Lemcke, Brommer & Partner Patentanwälte Partnerschaft mbB

(56) Entgegenhaltungen:
- DE-A1-102005 049 223
- DE-A1-102006 033 438
- DE-A1-102006 060 742

## Beschreibung

Die Erfindung betrifft eine gattungsgemässe hydrostatische Stellschaltung nach dem Oberbegriff des Hauptanspruchs, z.B. als Hilfslenkung in Nutzfahrzeugen, nämlich mit einem Hydraulikflüssigkeit aufweisenden Tank und mit einer gesteuerten, zwei Anschlüsse aufweisenden reversierbaren Hydraulikpumpe, von denen jeder Anschluss zu einer der beiden Kammern zumindest eines doppeltwirkenden Hydraulikzylinders, (z.B. Lenkzylinder) über je eine Verbindungsleitung führt, wobei nach der einen Ansteuerung der Hydraulikpumpe, z.B. durch Einschlagrichtung und -winkel der Lenkung eine bestimmte Menge der Hydraulikflüssigkeit von dem einem als Druckanschluss wirkenden Anschluss der beiden Anschlüsse der Hydraulikpumpe und über die eine Verbindungsleitung an die angeschlossene eine Kammer unter Verschiebung des Kolbens des Hydraulikzylinders geleitet und dabei Hydraulikflüssigkeit aus der anderen Kammer in die andere Verbindungsleitung zu dem anderen als Sauganschluss wirkenden Anschluss verdrängt und wobei bei der zu der einen Ansteuerung reversierten anderen Ansteuerung, z.B. durch Änderung der Einschlagrichtung der Lenkung die Hydraulikflüssigkeit von dem nun als Druckanschluss wirkenden anderen Anschluss der Hydraulikpumpe und hierbei über die andere Verbindungsleitung an die angeschlossene andere Kammer unter entgegengesetzter Verschiebung des Kolbens des Hydraulikzylinders geleitet und dabei Hydraulikflüssigkeit aus der einen Kammer in die eine Verbindungsleitung zu dem einen nun als Sauganschluss wirkenden Anschluss der Hydraulikpumpe verdrängt wird, wobei eine zum Tank führende Rücklaufleitung mit einem elektrisch gesteuerten Magnetventil versehen ist, das in seiner stromführenden Betriebsstellung die Rücklaufleitung zum Tank hin sperrt und in der stromlosen Stellung (z.B. bei Ausfall des Stroms) aufgrund der Kraft einer Feder in eine Stellung geschaltet wird, in der die Rücklaufleitung geöffnet ist, und wobei die Rücklaufleitung über eine Zweigleitung mit der einen Verbindungsleitung und über eine andere Zweigleitung mit der anderen Verbindungsleitung verbunden ist und die eine Zweigleitung ein aufgrund der Kraft einer Feder zu der einen Kammer hin schliessendes und die andere Zweigleitung ein aufgrund der Kraft einer anderen Feder zu der anderen Kammer hin schliessendes Rückschlagventil aufweist, wobei diese beiden Rückschlagventile über einen zwischen ihnen liegenden Verbindungspunkt aufeinander zu hin öffnen. Die Erfindung betrifft auch die Verwendung der hydrostatischen Stellschaltung.

Solche Stellschaltungen sind in einer Vielzahl von Ausführungsformen bekannt (z.B. DE 10 2004 029 409 A1, z.B. wie bei der Erfindung als Hilfslenkung der Hinterachse von Nutzfahrzeugen. Das Lenken geschieht hierbei über den doppeltwirkenden Hydraulikzylinder, z.B. Lenkzylinder über je eine Verbindungsleitung, wobei nach der einen bestimmten Ansteuerung der Hydraulikpumpe, z.B. durch Einschlagrichtung und -winkel der Lenkung eine bestimmte Menge der Hydraulikflüssigkeit von dem einem als Druckanschluss wirkenden Anschluss der beiden Anschlüsse der Hydraulikpumpe und über die eine Verbindungsleitung an die angeschlossene eine Kammer unter Verschiebung des Kolbens des Hydraulikzylinders geleitet und dabei Hydraulikflüssigkeit aus der anderen Kammer in die andere Verbindungsleitung zu dem anderen als Sauganschluss wirkenden Anschluss verdrängt. Bei einem Gleichlaufzylinder ist im Regelbetrieb die Menge an Hydraulikflüssigkeit gleich gross; es handelt sich um einen geschlossenen Hydraulikkreislauf. Beim Lenkeinschlag in die andere Richtung fleisst die Hydraulikflüssigkeit in die andere Richtung zu der anderen Kammer, woduch ein entgegengesetzter Lenkeinschlag bewirkt wird.

Diese gattungsgemässe hydrostatische Stellschaltung weist den Vorteil auf, dass die von der lenkenden Person aufzubringende Kraft beim Lenken extrem verkleinert ist; ausserdem braucht man keine mechansichen Verbindungen wie Wellen, Gestänge und Umlenkgetriebe.

In einer zum Tank führenden Rücklaufleitung ist ein elektrisch gesteuertes Magnetventil vorgesehen, das in seiner stromführenden Betriebsstellung die Rücklaufleitung zum Tank hin sperrt, wodurch der Hydraulikzylinder über die Hydraulikpumpe betätigbar bleibt. Die Rücklaufleitung ist aussserdem Über eine ein aufgrund der Kraft einer Feder zu der einen Kammer hin schliessendes Rückschlagventil aufweisende Zweigleitung mit der einen Verbindungsleitung und über eine andere ein aufgrund der Kraft einer anderen Feder zu der anderen Kammer hin schliessendes Rückschlagventil aufweisende Zweigleitung mit der anderen Verbindungsleitung verbunden.

Im normalen Betriebsmodus befindet sich das elektrisch gesteuerte Ventil in seiner stromführenden Betriebsstellung, wodurch der Tank von der gesamten Schaltung abgetrennt wird und durch die Ansteuerung der Pumpe eine Verschiebung des Kolbens des Hydraulikzylinders eingeleitet wird. Aus sicherheitstechnischen Überlegungen resultiert die Notwendigkeit, unter bestimmten Umständen den Hydraulizylinder vom normalen Betriebsmodus in einen anderen Betriebsmodus zu versetzen, beispielsweise die Stellschaltung zu desaktivieren. Um dies zu bewirken, wird die Versorgung der Spule des Magnetventils mit elektrischem Strom unterbunden, wodurch dieses aufgrund der Kraft der Feder in eine Stellung geschaltet wird, in der die Rücklaufleitung öffnet, so dass allfällige Restmengen an Hydraulikflüssigkeit über das eine oder andere Rückschlagventil zum Tank ablaufen können.

Der Nachteil bei der gattungsgemässen Stellschaltung wird ersichtlich, wenn es mehrere Betriebsmodi gibt, in die der Hydraulikzylinder unter bestimmten Umständen in Abhängigkeit der weiteren massgebenden Umstände, zu denen im Falle eines Lenksystems die Fahrzeuggeschwindigkeit zählt, versetzt werden sollte .

Eine hydrostatische Stellschaltung gemäß der Präambel des Anspruchs 1 ist von der DE 10 2006 060 742 A1 offenbart.

Der Erfindung liegt die Aufgabe zugrunde, eine gattungsgemässe hydrostatische Stellschaltung nach dem Oberbegriff des Hauptanspruchs so weiterzubilden, dass die Stellschaltung selbst bei Stromausfall in gemäss der davor geltenden letzten Umgebungsbedingung funktioniert.

Diese Aufgabe wird bei einer gattungsgemässen hydrostatischen Stellschaltung nach dem Oberbegriff des Hauptanspruchs erfindungsgemäss durch dessen kennzeichndende Merkmale, also dadurch gelöst, dass die Rücklaufleitung ein in seiner einen Schaltstellung die Rücklaufleitung zum Tank hin sperrendes und in seiner anderen Schaltstellung öffnendes, elektromagnetisch in Abhängigkeit einer Umgebungsbedingung in eine der beiden Schaltstellung gesteuert gebrachtes, gerastetes Umschaltventil aufweist, das (z.B. bei Ausfall des Stroms) in der (vor dem Ausfall eingenommenen) Schaltstellung aufgrund der Rastung verbleibt.

Bei der erfindungsgemässen Stellschaltung bleibt also die letzte Umgebungsbedingung in Form des Schaltzustandes des Umschaltventils selbst im stromlosenzustand erhalten, in welchem das Magnetventil aufgrund der Kraft der Feder in seine Ausschaltstellung geschaltet wird.

Wenn keine Gleichlaufzylinder verwendet werden, bei denen gleiche Mengen an Hydraulikflüssigkeit aus dessen beiden Kammern als geschlossenem Hydraulikkreislauf verdrängt werden, so wird in vorteihafter Weiterbidung der Erfindung der Hydraulikzylinder als Differentialzylinder ausgebildet. Bei Differentialzylindern wird aus der kolbenstangenseitigen Kammer eine andere Menge an Hydraulikflüssigkeit als aus der kolbenseitigen Kammer verdrängt. Daher muss diese ansonsten erfindungsgemäss wirkende Stellschaltung erweitert werden, um nämlich entweder die Differenz an Hydraulikflüssigkeit in den Tank abzuleiten oder bei umgekehrter Bewegungsrichtung des Kolbens des Differentialzylinders aus dem Tank ansaugen. Diese Erweiterung der Schaltung wird ebenfalls -unabhängig von der Gestaltung der Hydraulikzylinder- dann vorteilhafterweise eingesetzt, wenn ein ständiger Austausch der Hydraulikflüssigkeit zwischen dem Arbeitskreis und dem Tank stattfinden sollte.

Um das Ansaugen zu ermöglichen, ist zweckmässigerweise dann die eine und die andere Verbindungsleitung über eine bzw. eine andere Tankleitung mit dem Tank über ein zu diesem hin sperrendes drittes weiteres bzw. anderes weiteres drittes Rückschlagventil verbunden.

Ferner weist jede Verbindungsleitung ein zu der einen oder der anderen Kammer hin öffnendes weiteres eines bzw. anderes Rückschlagventil auf und ist das eine weitere und das andere weitere Rückschlagventil zwischen dem Anschlusspunkt jeder Zweigleitung mit der Verbindungsleitung und dem einen bzw. anderen Anschluss der Hydraulikpumpe angeordnet.

Um das Ableiten der überschüssigen Menge an Hydraulikflüssigkeit zum Tank zu bewerkstelligen, ist zwischen jedem Anschlusspunkt und dem Tank eine und eine andere Überdruckleitung vorgesehen, die mit dem einem druckgesteuerten Ventil bzw. dem anderen druckgesteuerten Ventil versehen ist. Das eine druckgesteuerte Ventil ist ohne Druckbeaufschlagung geschlossen und öffnet gegen die Kraft einer Feder durch Einwirkung einer Summendruckkraft, die sich aus den in der einen Überdruckleitung und der anderen Verbindungsleitung herrschenden Drücken ergibt, wobei eine der Druckübertragung dienende Pilotleitung an die andere Verbindungsleitung angeschlossen ist. Ähnlich ist das andere druckgesteuerte Ventil ohne Druckbeaufschlagung geschlossen und öffnet gegen die Kraft einer Feder durch Einwirkung einer Summendruckkraft, die sich aus den in der anderen Überdruckleitung und der einen Verbindungsleitung herrschenden Drücken ergibt, wobei eine der Druckübertragung dienende andere Pilotleitung an die eine Verbindungsleitung angeschlossen ist. Diese letztgennanten Ventile übernehmen dann einerseits die Funktion der Druckbegrenzung, andererseits dienen sie zur Vorspannung der gesamten Stellschaltung, da sie erst bei Vorliegen von Drücken in den beiden Kammern der Hydraulikzylinder die Verbindung zum Tank freischalten.

Zweckmässige Ausgestaltungen und Weiterbildungen der Erfindung sind in den restlichen Unteransprüchen gekennzeichnet.

Ausführungsbeispiele der Erfindung werden nachfolgend unter Bezugnahme auf die Zeichnung näher erläutert. In dieser zeigt:
- Figur 1: eine erste Ausführungsform der Stellschaltung für Gleichlaufzylinder und
- Figur 2: eine zweite Ausführungsform der Stellschaltung für Differentialzylinder.

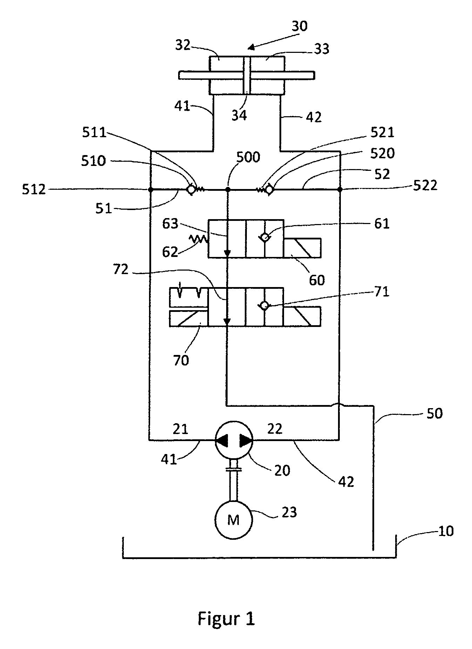

Die vereinfachte hydrostatische Stellschaltung nach Figur 1 weist einen Hydraulikflüssigkeit aufweisenden Tank 10 und mit einer gesteuerten, zwei Anschlüsse 21,22 aufweisenden reversierbaren Hydraulikpumpe 20 mit einem Motor 23 auf, von denen jeder Anschluss 21,22 zu einer der beiden Kammern 32,33 zumindest eines doppeltwirkenden Hydraulikzylinders 30 über je eine Verbindungsleitung 41,42 führt.

Je nach bestimmter Ansteuerung der Hydraulikpumpe 20 (z.B. durch Einschlagrichtung und -winkel der Lenkung) wird eine bestimmte Menge der Hydraulikflüssigkeit von dem als Druckanschluss wirkenden einen Anschluss 21 der beiden Anschlüsse der Hydraulikpumpe und über die eine Verbindungsleitung 41 an die angeschlossene eine Kammer 32 unter Verschiebung des Kolbens 34 des Hydraulikzylinders 30 geleitet und dabei Hydraulikflüssigkeit aus der anderen Kammer 33 in die andere Verbindungsleitung 42 zu dem anderen, dann als Sauganschluss wirkenden Anschluss 22 verdrängt. Bei zu der einen entgegengesetzter Ansteuerung anderen Ansteuerung (z.B. durch Änderung der Einschlagrichtung der Lenkung) wird die Hydraulikflüssigkeit von dem nun als Druckanschluss wirkenden anderen Anschluss 22 der Hydraulikpumpe 20 und hierbei über die andere Verbindungsleitung 42 an die angeschlossene andere Kammer 33 unter entgegengesetzter Verschiebung des Kolbens 34 des Hydraulikzylinders 30 geleitet und dabei Hydraulikflüssigkeit aus der einen Kammer 32 in die eine Verbindungsleitung 41 zu dem einen nun als Sauganschluss wirkenden Anschluss 21 der Hydraulikpumpe 20 verdrängt.

Es ist weiter eine zum Tank 10 führende Rücklaufleitung 50 mit einem elektrisch gesteuerten Magnetventil 60 vorgesehen, das in seiner stromführenden Betriebsstellung die Rücklaufleitung 50 zum Tank 10 hin durch ein Rückschlagventil 61 sperrt. Unbestromt wird aufgrund der Kraft einer Feder 62 das Magnetventil 50 in seine Grundstellung mit einem Durchgang 63 geschaltet, in der die Rücklaufleitung 50 zum Tank 10 geöffnet ist.

Die Rücklaufleitung 50 ist von einem Verbindungspunkt 500 über eine Zweigleitung 51 mit der einen Verbindungsleitung 41 und über eine andere Zweigleitung 52 mit der anderen Verbindungsleitung 42 und weist die eine Zweigleitung 51 ein aufgrund der Kraft einer Feder 511 zu der einen Kammer 32 hin schliessendes Rückschlagventil 510 und die andere Zweigleitung 52 ein aufgrund der Kraft einer anderen Feder 521 zu der anderen Kammer 33 hin schliessendes anderes Rückschlagventil 520 auf.

Die Rücklaufleitung 50 weist ein in seiner einen Schaltstellung die Rücklaufleitung zum Tank 10 hin aufgrund eines Rückschlagventils 71 sperrendes und in seiner anderen Schaltstellung über einen Durchgang 72 öffnendes, elektromagnetisch in eine der beiden Schaltstellung gesteuert gebrachtes, gerastetes Umschaltventil 70 auf, das -aufgrund der Rastung- in seiner eingenommenen Schaltstellung verbleibt. Bei der erfindungsgemässen Stellschaltung gemäss Figur 1 bleibt also der Schaltzustand des Umschaltventils 70 selbst im stromlosen Zustand erhalten, in welchem das Magnetventil 60 aufgrund der Kraft der Feder 61 in seine Grundstellung geschaltet wird.

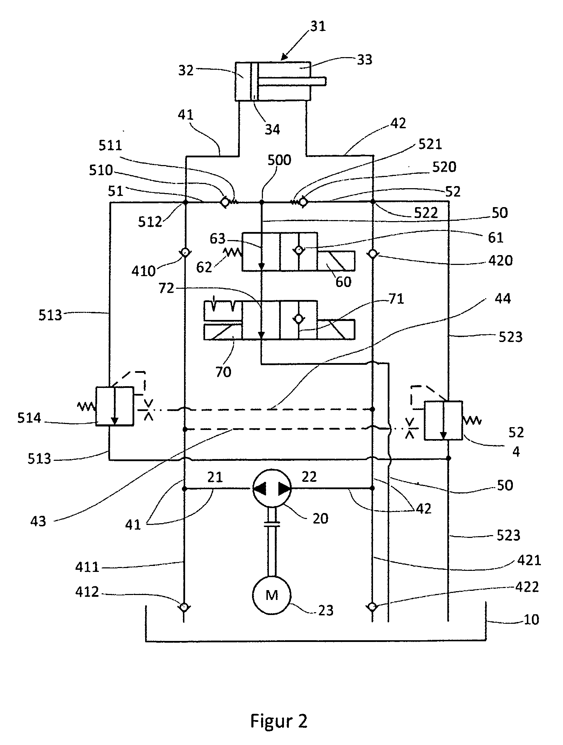

Die zweite erfindungsgemässe Ausführungsform der Stellschaltung nach Figur 2 kennzeichnet sich dadurch aus, dass der Hydraulikzylinder 31 als Differentialzylinder ausgebildet ist. Ferner weist jede Verbindungsleitung 41,42 ein zu der einen bzw. anderen Kammer 32 bzw. 33 hin öffnendes weiteres eines oder weiteres anderes Rückschlagventil 410,420 auf. Das weitere eine Rückschlagventil 410 und das weitere andere Rückschlagventil 420 ist zwischen dem Anschlusspunkt 512,522 jeder Zweigleitung 51,52 mit der Verbindungsleitung 41,42 und dem einen bzw. anderen Anschluss 21 bzw. 22 der Hydraulikpumpe 20 angeordnet.

Damit auch auf der Saugseite genügend Hydraulikflüssigkeit zur Verfügung steht, ist die eine Verbindungsleitung 41 und die andere Verbindungsleitung 42 über eine 411 bzw. eine andere Tankleitung 421 mit dem Tank über ein zu diesem hin sperrendes weiteres drittes 412 bzw. anderes weiteres drittes Rückschlagventil 422 verbunden, über die die Hydraulikflüssigkeit angesaugt werden kann.

Ferner ist zwischen jedem Anschlusspunkt 512,522 und dem Tank 10 eine 513 und eine andere Überdruckleitung 523 vorgesehen, die mit einem druckgesteuerten Ventil 514 bzw. anderen druckgesteuerten Ventil 524 versehen ist. Baut sich in der jeweiligen Leitung ein Überdruck auf, so öffnet das jeweilige druckgesteuerte Ventil 514,524 und der Überschuss kann über die eine bzw. andere Überdruckleitung 513 bzw. 523 in den Tank 10 ablaufen. Das eine druckgesteuerte Ventil 514 öffnet auch dann, wenn die Summenkraft aus den in der einen Überdruckleitung 513 und der anderen Verbindungsleitung 42 herrschenden Drücke die Vorspannkraft der Feder des Ventils übersteigt, wobei eine der Druckübertragung dienende Pilotleitung 44 an die andere Verbindungsleitung 42 angeschlossen ist. Ähnlich öffnet das andere druckgesteuerte Ventil 524 auch dann, wenn die Summenkraft aus den in der anderen Überdruckleitung 523 und der einen Verbindungsleitung 41 herrschenden Drücken die Vorspannkraft der Feder des Ventils übersteigt, wobei eine der Druckübertragung dienende andere Pilotleitung 43 an die eine Verbindungsleitung 41 angeschlossen ist. Somit dienen die beiden druckgesteuerten Ventile 514 und 524 der Vorspannung der gesamten Schaltung. Somit wird der Abfluss zum Tank erst beim Vorliegen der Drücke in den beiden Kammern des Hydraulikzylinders freigeschaltet.

Die Stellschaltung nach den Figuren 1 und 2 eignet sich erfindungsgemäss als Hilfslenkung für Nutzfahrzeuge.

## Patentansprüche

1. Hydrostatische Stellschaltung, z.B. als Hilfslenkung in Nutzfahrzeugen, mit einem Hydraulikflüssigkeit aufweisenden Tank (10) und mit einer gesteuerten, zwei Anschlüsse (21,22) aufweisenden reversierbaren Hydraulikpumpe (20), von denen jeder Anschluss zu einer der beiden Kammern (32,33) zumindest eines doppeltwirkenden Hydraulikzylinders (30,31), über je eine Verbindungsleitung (41,42) führt, wobei nach der einen Ansteuerung der Hydraulikpumpe, z.B. durch Einschlagrichtung und -winkel der Lenkung eine bestimmte Menge der Hydraulikflüssigkeit von dem einem als Druckanschluss wirkenden Anschluss (21) der beiden Anschlüsse (21,22) der Hydraulikpumpe (20) und über die eine Verbindungsleitung (41) an die angeschlossene eine Kammer (32) unter Verschiebung des Kolbens (34) des Hydraulikzylinders (30,31) geleitet und dabei Hydraulikflüssigkeit aus der anderen Kammer (33) in die andere Verbindungsleitung (42) zu dem anderen als Sauganschluss wirkenden Anschluss (22) verdrängt und wobei bei der zu der einen Ansteuerung reversierten anderen Ansteuerung, z.B. durch Änderung der Einschlagrichtung der Lenkung die Hydraulikflüssigkeit von dem nun als Druckanschluss wirkenden anderen Anschluss (22) der Hydraulikpumpe (20) und hierbei über die andere Verbindungsleitung (42) an die angeschlossene andere Kammer (33) unter entgegengesetzter Verschiebung des Kolbens (34) des Hydraulikzylinders (30,31) geleitet und dabei Hydraulikflüssigkeit aus der einen Kammer (32) in die eine Verbindungsleitung (41) zu dem einen nun als Sauganschluss wirkenden Anschluss (21) der Hydraulikpumpe (20) verdrängt wird, wobei eine zum Tank (10) führende Rücklaufleitung (50) mit einem elektrisch gesteuerten Magnetventil (60) versehen ist, das in seiner stromführenden Betriebsstellung die Rücklaufleitung (50) zum Tank hin (10) sperrt und in seiner stromlosen Stellung aufgrund der Kraft einer Feder (62) in seine stromlose Betriebsstellung (Figur 1, Figur 2) geschaltet wird, in der die Rücklaufleitung (50) geöffnet ist, und wobei die Rücklaufleitung (50) über eine Zweigleitung (51) mit der einen Verbindungsleitung (41) und über eine andere Zweigleitung (52) mit der anderen Verbindungsleitung (42) verbunden ist und die eine Zweigleitung (51) ein aufgrund der Kraft einer Feder (511) zu der einen Kammer (32) hin schliessendes und die andere Zweigleitung (52) ein aufgrund der Kraft einer anderen Feder (521) zu der anderen Kammer (33) hin schliessendes Rückschlagventil (510 bzw. 520) aufweist,
**dadurch gekennzeichnet, dass** die Rücklaufleitung (50) ein in seiner einen Schaltstellung die Rücklaufleitung (50) zum Tank (10) hin sperrendes und in seiner anderen Schaltstellung öffnendes, elektromagnetisch in Abhängigkeit von einer Umgebungsbedingung in eine der beiden Schaltstellungen gesteuert gebrachtes, gerastetes Umschaltventil (70) aufweist, das bei Ausfall des Stroms in der davor eingenommenen Schaltstellung verbleibt.

2. Stellschaltung nach Anspruch 1, **dadurch gekennzeichnet, dass** die eine und die andere Zweigleitung (51 bzw. 52) an das dem Tank (10) abgewandte Ende (500) der Rücklaufleitung (50) angeschlossen ist.

3. Stellschaltung nach Anspruch 1, **dadurch gekennzeichnet, dass** der Hydraulikzylinder als Gleichlaufzylinder (30) ausgebildet ist.

4. Stellschaltung nach Anspruch 1 oder 2, **dadurch gekennzeichnet, dass** der Hydraulikzylinder als Differentialzylinder (31) ausgebildet ist.

5. Stellschaltung nach Anspruch 3 oder 4, **dadurch gekennzeichnet, dass** jede Verbindungsleitung (41,42) ein zu der einen bzw. anderen Kammer (32 bzw. 33) hin öffnendes weiteres eines oder anderes Rückschlagventil (410 bzw, 420) aufweist, dass das eine weitere und das andere weitere Rückschlagventil (410,420) zwischen dem Anschlusspunkt (512,522) jeder Zweigleitung (51,52) mit jeder Verbindungsleitung (41,42) und dem einen bzw. anderen Anschluss (21 bzw. 22) der Hydraulikpumpe (20) angeordnet ist und dass zwischen jedem Anschlusspunkt (512,522) und dem Tank (10) eine und eine andere Überdruckleitung (513,523) vorgesehen ist, die mit einem bzw. anderen druckgesteuerten Ventil (514 bzw. 524) versehen ist.

6. Stellschaltung nach einem der vorhergehenden Ansprüche, **dadurch gekennzeichnet, dass** die eine und die andere Verbindungsleitung (41 bzw. 42) über eine bzw. eine andere Tankleitung (411 bzw. 421) mit dem Tank (10) über ein zu diesem hin sperrendes weiteres drittes bzw. anderes weiteres drittes Rückschlagventil (412 bzw. 422) verbunden ist.

7. Verwendung einer Stellschaltung nach einem der Ansprüche 1 bis 6 als Hilfslenkung für Nutzfahrzeuge.

## Claims

1. Hydrostatic actuation circuit, for example as a power-assisted steering system in commercial vehicles, having a tank (10) containing hydraulic fluid and having a controlled, reversible hydraulic pump (20) having two connections (21, 22), of which each connection leads *via* a connecting line (41, 42) to one of the two chambers (32, 33) of at least one double-action hydraulic cylinder (30, 31), wherein after one activation of the hydraulic pump, for example as a result of setting the turning direction and turning angle of the steering mechanism, a defined amount of the hydraulic fluid is conducted from one connection (21) of the two connections (21, 22) of the hydraulic pump (20), which connection (21) acts as a pressure connection, and *via* the first connecting line (41) to the associated first chamber (32), thus displacing the piston (34) of the hydraulic cylinder (30, 31) and at the same time forcing hydraulic fluid out of the other chamber (33) into the other connecting line (42) to the other connection (22), which acts as a suction connection, and wherein in the event of another activation in the reverse direction with respect to the first activation, for example as a result of changing the turning direction of the steering mechanism, the hydraulic fluid is conducted from the other connection (22) of the hydraulic pump (20), which connection (22) then acts as a pressure connection, and *via* the other connecting line (42) to the associated other chamber (33), thus displacing the piston (34) of the hydraulic cylinder (30, 31) in the opposite direction and at the same time forcing hydraulic fluid out of the first chamber (32) into the first connecting line (41) to the first connection (21) of the hydraulic pump (20), which connection (21) then acts as a suction connection, wherein a return line (50) that leads to the tank (10) is provided with an electrically controlled solenoid valve (60) which, when in its current-carrying operating position, blocks the return line (50) towards the tank (10) and, when in its currentless position, is switched under the force of a spring (62) into its currentless operating position (Figure 1, Figure 2) in which the return line (50) is open, and wherein the return line (50) is connected *via* a branch line (51) to the first connecting line (41) and *via* another branch line (52) to the other connecting line (42), and the first branch line (51) has a check valve (510) which, under the force of a spring (511), closes towards the first chamber (32) and the other branch line (52) has a check valve (520) which, under the force of another spring (521), closes towards the other chamber (33),
**characterised in that**
the return line (50) has a ratcheted switchover valve (70) which in one of its switching positions blocks the return line (50) towards the tank (10) and in its other switching position opens the return line (50) towards the tank (10) and which is moved into one of the two switching positions electromagnetically controlled in dependence upon an ambient condition, which switchover valve, on loss of current, remains in the switching position previously assumed.

2. Actuation circuit according to claim 1, **characterised in that** the one and the other branch line (51, 52, respectively) is connected to that end (500) of the return line (50) which is remote from the tank (10).

3. Actuation circuit according to claim 1, **characterised in that** the hydraulic cylinder is in the form of a synchronous cylinder (30).

4. Actuation circuit according to claim 1 or 2, **characterised in that** the hydraulic cylinder is in the form of a differential cylinder (31).

5. Actuation cylinder according to claim 3 or 4, **characterised in that** each connecting line (41, 42) has a further one or another check valve (410, 420, respectively) which opens towards the one or the other chamber (32, 33, respectively); the one further and the other further check valve (410, 420) is arranged between the connection point (512, 522) of each branch line (51, 52) to each connecting line (41, 42) and the one or the other connection (21, 22, respectively) of the hydraulic pump (20); and between each connection point (512, 522) and the tank (10) there is provided one or another overpressure line (513, 523) which is provided with one or another pressure-controlled valve (514, 524, respectively).

6. Actuation circuit according to any one of the preceding claims, **characterised in that** the one and the other connecting line (41, 42, respectively) is connected *via* one or another tank line (411, 421, respectively) to the tank (10) *via* a further third or another further third check valve (412, 422, respectively) which blocks towards the tank.

7. Use of an actuation circuit according to any one of claims 1 to 6 as a power-assisted steering system for commercial vehicles.

## Revendications

1. Circuit de commande hydrostatique, par exemple utilisé comme direction assistée dans les véhicules utilitaires, avec un réservoir (10) contenant un fluide hydraulique et avec une pompe hydraulique (20) commandée réversible, présentant deux raccords (21, 22), dont chaque raccord conduit à une des deux chambres (32, 33) d'au moins un vérin hydraulique à double effet (30, 31) par l'intermédiaire d'une conduite de liaison (41, 42) respective, dans lequel, après une activation de la pompe hydraulique, par exemple par le sens et l'angle de braquage de la direction, une quantité déterminée de fluide hydraulique est conduite du raccord (21) agissant comme raccord de refoulement des deux raccords (21, 22) de la pompe hydraulique (20) et via la conduite de liaison (41) à la chambre (32) raccordée en déplaçant le piston (34) du vérin hydraulique (30, 31), du fluide hydraulique étant refoulé à cette occasion de l'autre chambre (33) dans l'autre conduite de liaison (42) vers l'autre raccord (22) agissant comme raccord d'aspiration, et dans lequel, lors de l'autre activation en sens inverse de ladite une activation, par exemple par changement du sens de braquage de la direction, le fluide hydraulique est conduit de l'autre raccord (22) de la pompe hydraulique (20) agissant à présent comme raccord de refoulement et dans ce cas via l'autre conduite de liaison (42) à l'autre chambre (33) raccordée en déplaçant dans le sens opposé le piston (34) du vérin hydraulique (30, 31), du fluide hydraulique étant refoulé à cette occasion de la chambre (32) dans la conduite de liaison (41) vers le raccord (21) de la pompe hydraulique (20) agissant à présent comme raccord d'aspiration, une conduite de retour (50) conduisant au réservoir (10) étant pourvue d'une électrovanne (60) à commande électrique qui, dans sa position de fonctionnement alimentée en courant, ferme la conduite de retour (50) vers le réservoir (10) et, dans sa position non alimentée, est mise sous l'effet de la force d'un ressort (62) dans sa position de fonctionnement sans courant (1, 2) dans laquelle la conduite de retour (50) est ouverte, et la conduite de retour (50) étant reliée par une conduite de dérivation (51) à la conduite de liaison (41) et par une autre conduite de dérivation (52) à l'autre conduite de liaison (42) et la conduite de dérivation (51) présentant un clapet anti-retour (510) fermant le passage vers la chambre (32) sous l'effet de la force d'un ressort (511) et l'autre conduite de dérivation (52) un clapet anti-retour (520) fermant le passage vers l'autre chambre (33) sous l'effet de la force d'un autre ressort (521),
**caractérisé en ce que**
la conduite de retour (50) présente une vanne de commutation (70) mise et verrouillée dans une de ses deux positions de commutation de manière commandée électromagnétiquement en fonction d'une condition d'environnement, qui, dans une position de commutation, ferme, et, dans son autre position de commutation, ouvre la conduite de retour (50) vers le réservoir (10), et qui, en cas de défaillance du courant, reste dans la position de commutation qu'elle occupait avant celle-ci.

2. Circuit de commande selon la revendication 1, **caractérisé en ce que** la conduite de dérivation (51) et l'autre conduite de dérivation (52) sont raccordées à l'extrémité (500) de la conduite de retour (50) éloignée du réservoir (10).

3. Circuit de commande selon la revendication 1, **caractérisé en ce que** le vérin hydraulique est réalisé sous la forme d'un vérin synchrone (30).

4. Circuit de commande selon la revendication 1 ou 2, **caractérisé en ce que** der vérin hydraulique est réalisé sous la forme d'un vérin différentiel (31).

5. Circuit de commande selon la revendication 3 ou 4, **caractérisé en ce que** les conduite de liaison (41, 42) présentent en outre respectivement un clapet anti-retour supplémentaire (410) et un autre clapet anti-retour supplémentaire (420) ouvrant respectivement vers la chambre (32) et la chambre (33), que le clapet anti-retour supplémentaire (410) et l'autre clapet anti-retour supplémentaire (420) sont disposés entre le point de raccordement (512, 522) respectif de la conduite de dérivation (51, 52) respective avec la conduite de liaison (41, 42) respective et le raccord (21), respectivement l'autre raccord (22) de la pompe hydraulique (20), et qu'entre les points de raccordement (512, 522) et le réservoir (10) sont prévues respectivement une conduite de surpression (513) et une autre conduite de surpression (523) qui sont pourvues respectivement d'une vanne commandée par pression (514) et d'une autre vanne commandée par pression (524).

6. Circuit de commande selon l'une des revendications précédentes, **caractérisé en ce que** la conduite de liaison (41) et l'autre conduite de liaison (42) sont reliées respectivement par une conduite de réservoir (411) et une autre conduite de réservoir (421) au réservoir (10) respectivement par l'intermédiaire d'un troisième clapet anti-retour supplémentaire (412) et d'un autre troisième clapet anti-retour supplémentaire (422) fermant vers le réservoir (10).

7. Utilisation d'un circuit de commande selon l'une des revendications 1 à 6 comme direction assistée pour véhicules utilitaires.
